# EUROPEAN PATENT APPLICATION

(11) **EP 1 346 783 A2**
(43) Date of publication of application: **24.09.2003**
(21) Application number: 03003259.3
(22) Date of filing: 24.02.2003
(51) Int. Cl.: B21H 3/08

(54) **Method for threading inlets formed by drawing, particularly for manufacturing elements of radiators and the like**

(30) Priority: 27.02.2002 IT MI20020391
(71) Applicant: Ercos S.p.A., 25040 Monticelli Brusati (Prov.of Brescia) (IT)
(72) Inventor: Bellesi, Luca, 25040 Monticelli Brusati (Prov. Brescia) (IT)
(74) Representative: Modiano, Guido, Dr.-Ing.

(57) **Abstract**

A method for threading inlets formed by drawing, particularly for manufacturing elements of radiators and the like, comprising the step of inserting the rolling tool in an inlet (2) formed by drawing; moreover, while the rolling tool is inserted, an outer containment element (10) is applied to the outside diameter of the inlet and has an inside diameter (da) that is substantially equal to the inside diameter (dm) of the inlet (2) plus twice the radial thickness (s) of the inlet.

## Description

The present invention relates to a method for threading inlets formed by drawing, particularly for manufacturing elements of radiators and the like.

As is known, currently many industrial fields use, in order to produce threads, a rolling step that in practice produces a plastic deformation by virtue of which the part being machined is subjected to an axially symmetrical deformation.

Considering in particular the provision of threads on inlets or hubs formed by drawing, it is particularly important to be able to use cold rolling, with respect to conventional threading by chip-formation machining, since the latter entails cutting the fibers of the metal, consequently reducing the mechanical strength; moreover, the removal of material would reduce further the already low thickness of the metal plate to be threaded.

Threading by rolling achieves the advantage of obtaining the profile of the thread solely through a cold plastic deformation of the steel, and in this manner the unit yield strength load of the steel increases with respect to the initial value thanks to the phenomenon of work-hardening.

Considering particular formation of threads on hubs formed by drawing in order to produce elements of radiators and the like for heating systems, considerable difficulties are currently encountered because working on relatively low thicknesses, as are typically the dimensions of the metal plates that are drawn to produce the elements of radiators, inevitably causes the deformation of the hub and its failure, and therefore clearly visible defects occur.

Moreover, another drawback is constituted by the fact that the rolling tap, during descent into the inlet or hub, in practice causes the expansion of the hub without producing the required thread correctly and compromising the mechanical strength and the ease of assembly of the elements.

The aim of the invention is to solve the problem noted above, by providing a method for threading inlets formed by drawing, particularly for providing elements of radiators and the like, that allows to provide threads that are uniform and have a constant diameter, even when using relatively low thicknesses of metal for the inlet or hub.

Within this aim, an object of the invention is to provide a method in which in practice the deformation of the hub during threading is optimized, achieving its deformation only on the surface that is affected by the threading tap without deformation on the outer surface.

Another object of the present invention is to provide a method that thanks to its particular constructive characteristics is capable of giving the greatest assurances of reliability and safety in use.

Another object of the present invention is to provide a method that can be obtained easily starting from commonly commercially available elements and materials and is further competitive from a merely economical standpoint.

This aim and these and other objects that will become better apparent hereinafter are achieved by a method for threading inlets formed by drawing, particularly for manufacturing elements of radiators and the like, according to the invention, comprising the step of inserting the rolling tool in an inlet formed by drawing, characterized in that it consists in applying to the outside diameter of said inlet an outer containment element with an inside diameter that is substantially equal to the inside diameter of said inlet plus twice the radial thickness of said inlet.

Further characteristics and advantages of the invention will become better apparent from the description of a preferred but not exclusive embodiment of a method for threading inlets formed by drawing, particularly for manufacturing elements of radiators and the like, illustrated only by way of non-limitative example in the accompanying drawings, wherein:

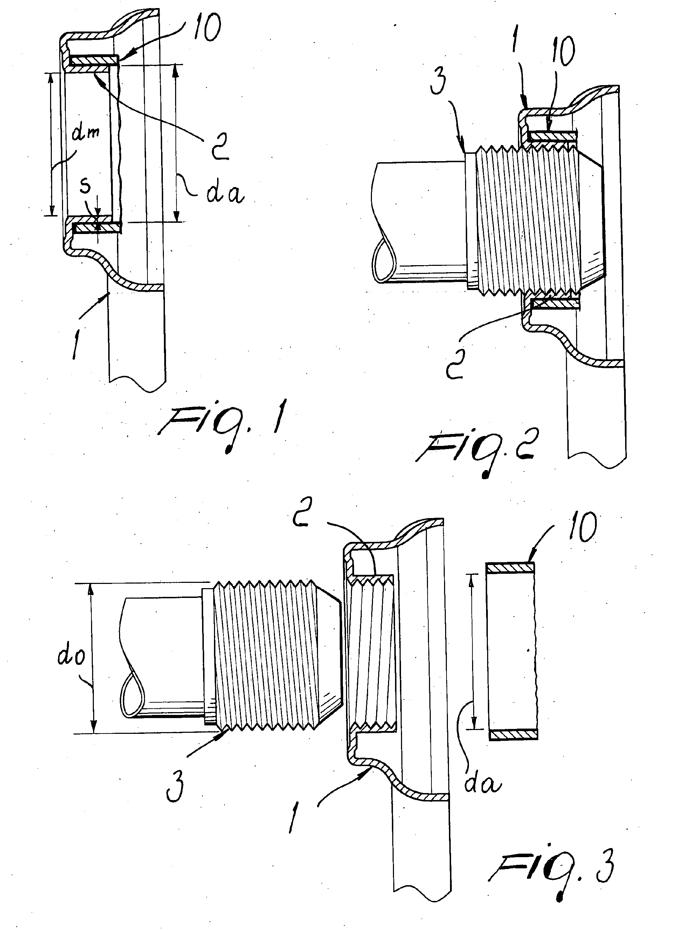

Figure 1 is a sectional view of the element to be threaded, which is constituted for example by a half head for radiator elements, to which the containment element is applied;
Figure 2 is a schematic sectional view of the step of threading by rolling;
Figure 3 is an exploded view of the step of removal of the tap and the containment ring;
Figure 4 is a sectional view of the element to be threaded with a shaped containment ring;
Figure 5 is a sectional view of the step for forming the thread;
Figure 6 is an exploded view of the threaded element with the shaped containment element and the tap removed;
Figure 7 is an exploded perspective view of the half head, illustrating the connector with double thread for the mutual connection of the various radiator elements and the containment element.

With reference to the figures, the method for threading inlets formed by drawing, particularly for manufacturing elements of radiators and the like, according to the invention, provides for the preliminary execution of a contoured element 1 by means of a drawing operation, which forms a cylindrical hub or inlet 2. In the specific example, the shaped element is constituted by a half head of a radiator element.

In order to produce the internal thread of the inlet 2 by way of a rolling operation, a conventional rolling tap 3 is used and is inserted in the inlet.

In theory, the tap must have a diameter d0 that is greater than the inside diameter dm of the inlet 2 and smaller than the inside diameter of the inlet dm plus twice the radial thickness s of the metal plate that forms the contoured part.

To perform threading by rolling on the half head or half element, a containment element, generally designated by the reference numeral 10, is applied to the outside diameter of the inlet, is preferably formed monolithically and advantageously has an inside diameter da = dm + 2s.

With this arrangement, if a tap with a diameter d0 = dm + s is used, in practice half the thickness of the metal plate that constitutes the inlet, i.e., the half toward the outside diameter, remains in practice unchanged and constitutes a support for the resulting thread, in which a nipple 15 with double opposite thread engages.

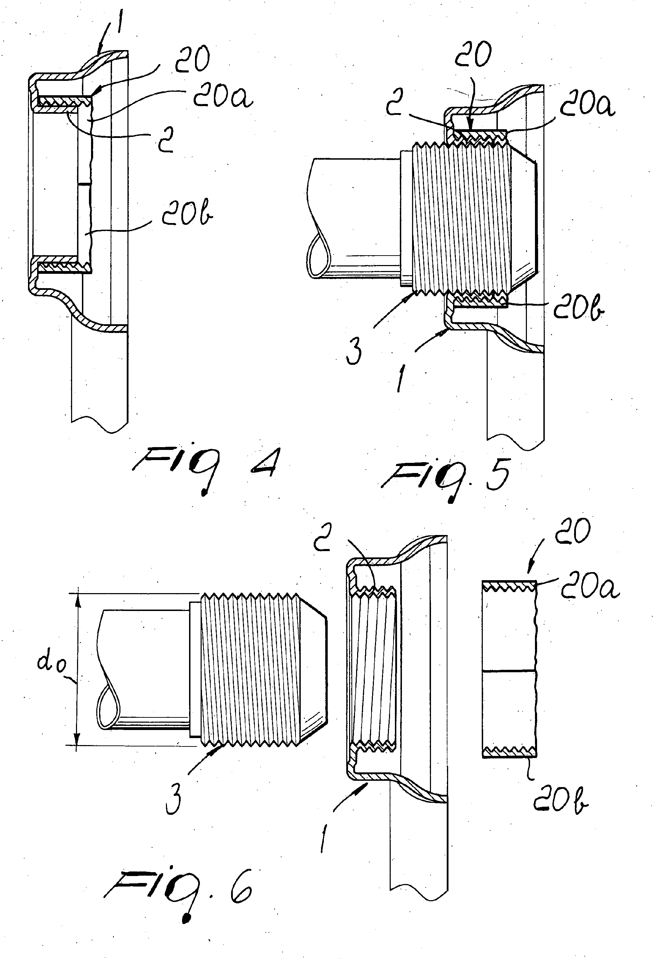

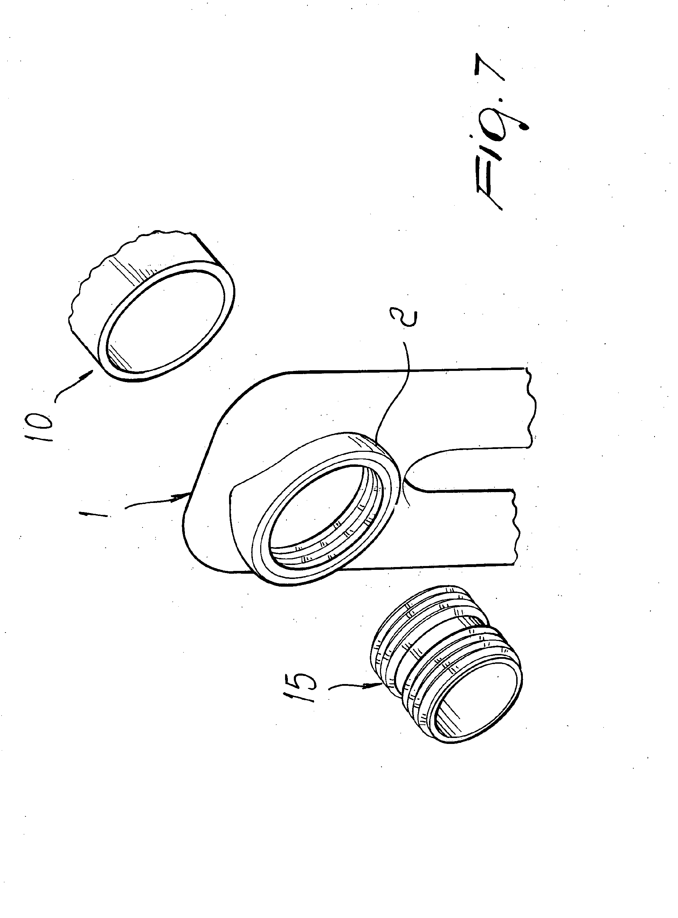

By using a contoured external body, designated by the reference numeral 20 in Figures 4 to 6 and preferably constituted by two halves 20a and 20b, it is possible to optimize the mechanical strength of the threaded inlet, since the recesses of the external body arrange themselves at the groove of the thread to be provided; in this manner, the deformation assumed by the metal plate of the inlet has an alternated shape, so that the inlet has a uniform thickness along the entire deformed metal plate.

In practice, with respect to the previous situation the thickness of the metal plate remains always constant and not variable as instead occurs in the preceding case, in which there is a displacement of the material that shifts from the groove of a thread to form the crest of the thread. In this case, according to the invention, the material moves in a radial direction from the inside outward, keeping the thickness constant.

In order to provide this type of thread, the advancement of the roller must be set so as to obtain a match between the recesses of the contoured ring 20 and the grooves of the thread.

As mentioned earlier, the containment element is constituted by a ring, formed advantageously by two halves, which it must be possible to open after the rolling operation but must be kept mutually clamped so as to be able to obtain constant dimensions and excellent repetitiveness of the machining operations, which allow to have inlets or hubs that always have correct diameters and have no undue failures.

From the above description it is thus evident that the invention achieves the intended aim and objects, and in particular the fact is stressed that a method is provided which allows to optimize all the operating steps and to obtain a high-quality end product.

The invention thus conceived is susceptible of numerous modifications and variations, all of which are within the scope of the appended claims.

All the details may further be any according to requirements.

In practice, the materials used, as well as the contingent shapes and dimensions, may be any according to requirements.

The disclosures in Italian Patent Application No. MI2002A000391 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for threading inlets formed by drawing, particularly for manufacturing elements of radiators and the like, comprising the step of inserting a rolling tool in an inlet formed by drawing, **characterized in that** it consists in applying to the outside diameter of said inlet an outer containment element with an inside diameter that is substantially equal to the inside diameter of said inlet plus twice the radial thickness of said inlet.

2. The method according to claim 1, **characterized in that** the diameter of said rolling tool is larger than the inside diameter of said inlet and is smaller than, or equal to, the inside diameter of said inlet plus the radial thickness of said inlet.

3. The method according to claim 1, **characterized in that** said containment element is constituted by a contoured outer body whose shape corresponds to the shape of the thread being provided in order to produce a radial displacement of the material of said inlet.

4. The method according to claim 3, **characterized in that** said contoured outer body comprises at least two halves that are kept clamped onto the outside diameter of said inlet.
